# EUROPEAN PATENT APPLICATION

(11) **EP 4 618 243 A1**
(43) Date of publication of application: **17.09.2025**
(21) Application number: 24203854.5
(22) Date of filing: 01.10.2024
(51) Int. Cl.: H01M 10/613, H01M 10/6556, H01M 10/6568, H01M 50/213, H01M 10/6555, H01M 10/6567

(54) **BATTERY MODULE AND BATTERY PACK**

(30) Priority: 12.03.2024 CN 202420483934 U; 14.05.2024 WO PCT/CN2024/093134
(71) Applicant: Eve Energy Co., Ltd., Huizhou, Guangdong 516006 (CN)
(72) Inventor: ZHAO, Yuhang, Huizhou, Guangdong 516006 (CN); WANG, Yuanyuan, Huizhou, Guangdong 516006 (CN); ZHANG, Guojiang, Huizhou, Guangdong 516006 (CN); YAN, Shiwei, Huizhou, Guangdong 516006 (CN)
(74) Representative: Murgitroyd & Company

(57) **Abstract**

The present disclosure provides a battery module (1000) and a battery pack. The battery module (1000) includes a liquid-cooling assembly (1), a battery cell assembly (2), and a plurality of heat-conductive members (3). The liquid-cooling assembly (1) includes a plurality of liquid-cooling plates (11) extending in a first direction, each of the liquid-cooling plates (11) including a plurality of arc-shaped portions (11A). The battery cell assembly (2) includes a plurality of cylindrically-shaped battery cells (21). Each of the heat-conductive members (3) is disposed between a battery cell (21) of the plurality of battery cells (21) and a respective arc-shaped portion (11A) of the plurality of arc-shaped portions (11A) of the liquid-cooling plate (11) for which the battery cell (21) is disposed on a side thereof. For each of the plurality of heat-conductive members (3), an angle α between lines connecting a center of an adjacent battery cell (21) and either end of the heat-conductive member (3) satisfies: 72°≤α≤82°.

## Description

### TECHNICAL FIELD

The present disclosure relates to the technical field of batteries, and more particularly, to a battery module and a battery pack.

### BACKGROUND

With the rapid development of new-energy vehicles, the requirements of pure electric vehicle users for vehicle mileage and charging rate are getting higher and higher, and the energy of a battery cell is getting higher and higher. As a result, the heating quantity of the battery cell in operation is getting higher and higher. At the same time, with the increase of the number of battery cells and the charging rate, the temperature consistency is more difficult to control, and the battery cell needs to be cooled and temperature-equalized through a more efficient liquid cooling solution.

In the related art, a liquid-cooling plate is mostly used for liquid-cooled heat dissipation of a battery cell, the liquid-cooling plate is in contact with a side surface of the battery cell, and the coolant flows in the liquid-cooling plate to form a convective heat transfer with the battery cell. However, due to the limited area for coolant flow in the liquid-cooling plate, it is difficult to control the temperature of the battery cell in an ideal state under a high-rate charging operation, thereby affecting a service life of the battery cell.

### SUMMARY

The present invention is defined by the independent claims as appended. Developments are set forth in the dependent claims.

Embodiments of the present disclosure provide a battery module and a battery pack, which may improve the technical problem that the heat exchange effect between a battery cell and a liquid-cooling plate is not good due to the limited area for coolant flow in the liquid-cooling plate, and that the temperature of the battery cell may thus not be easily controlled.

According to a first aspect, an embodiment of the present disclosure provides a battery module including:
a liquid-cooling assembly including a plurality of liquid-cooling plates extending in a first direction, the plurality of liquid-cooling plates being arranged at intervals in a second direction intersecting the first direction, each of the liquid-cooling plates including a plurality of arc-shaped portions;
a battery cell assembly including a plurality of cylindrically-shaped battery cells, each of the battery cells being disposed on a side of a respective liquid-cooling plate of the plurality of liquid-cooling plates in the second direction and connected to a corresponding arc-shaped portion of the plurality of arc-shaped portions of the respective liquid-cooling plate; and
a plurality of heat-conductive members each disposed between a battery cell of the plurality of battery cells and a respective arc-shaped portion of the plurality of arc-shaped portions of the liquid-cooling plate for which the battery cell is disposed on the side thereof, and connected to the battery cell and the respective arc-shaped portion;
wherein, for each of the plurality of heat-conductive members, an angle α between lines connecting a center of an adjacent battery cell and either end of the heat-conductive member satisfies: 72°≤α≤82°.

In one embodiment, in the first direction, a thickness of each of the heat-conductive members in the second direction is gradually reduced and then gradually increased.

In one embodiment, a shortest distance L in the second direction between the battery cell and the respective arc-shaped portion satisfies 0.05mm≤L≤0.5mm.

In one embodiment, for each of the arc-shaped portions, an angle β between lines connecting a center of a circle where the arc-shaped portion is located and either end of the arc-shaped portion satisfies: 56°≤β≤60°.

In one embodiment, in any two adjacent ones of the liquid-cooling plates, two of the arc-shaped portions disposed on the two liquid-cooling plates are oppositely arranged in the second direction;
a battery cell of the plurality of battery cells is connected with the two arc-shaped portions which are oppositely arranged in the second direction.

In one embodiment, each of the liquid-cooling plates further includes a plurality of connecting portions that each connects two adjacent ones of the arc-shaped portions in the liquid-cooling plate, and each of the connecting portions is flat-plate-shaped or arc-shaped.

In one embodiment, each of the heat-conductive members includes:
a first insulating layer located between a batter cell of the plurality of battery cells and a respective arc-shaped portion of the plurality of arc-shaped portions of the liquid-cooling plate for which the battery cell is disposed on the side thereof; and
two first adhesive layers;
wherein one of the two first adhesive layers is located between the first insulating layer and the respective arc-shaped portion and is connected to the first insulating layer and the respective arc-shaped portion, and another one of the two first adhesive layers is located between the first insulating layer and the battery cell and is connected to the first insulating layer and the battery cell.

In one embodiment, each of the liquid-cooling plates further includes a plurality of connecting portions, each of the heat-conductive members includes a second adhesive layer located between a battery cell of the plurality of battery cells and a respective arc-shaped portion of the plurality of arc-shaped portions of the liquid-cooling plate for which the battery cell is disposed on the side thereof and connecting the battery cell and the respective arc-shaped portion;
the liquid-cooling assembly further includes a second insulating layer coated on outer surfaces of each of the liquid-cooling plates, the heat-conductive members being in contact with a portion of the second insulating layer.

In one embodiment, each of the liquid-cooling plates is formed with a liquid inlet channel and a liquid outlet channel spaced apart in a third direction, and a first chamber communicating with the liquid inlet channel and the liquid outlet channel, the liquid inlet channel and the liquid outlet channel both extending in the first direction, the first direction, the second direction, and the third direction intersecting each other;
each of the liquid-cooling plates includes a liquid inlet end communicating with the liquid inlet channel and a liquid outlet end communicating with the liquid outlet channel;
wherein at least a portion of an orthographic projection of the liquid inlet channel and liquid outlet channel in the second direction falls on the battery cells that are disposed on the side of the liquid-cooling plate.

In one embodiment, the liquid inlet end and the liquid outlet end are disposed at a same end of the liquid-cooling plate;
the liquid-cooling assembly further includes:
a plurality of connecting members each disposed at one end of the liquid-cooling plate provided with the liquid inlet end and the liquid outlet end, wherein each of the connecting members is formed with a second chamber and a third chamber spaced apart, the second chamber communicating with the liquid inlet end, and the third chamber communicating with the liquid outlet end;
a liquid inlet pipe communicating with the second chambers of the connecting members; and
a liquid outlet pipe communicating with the third chambers of the connecting members.

In a second aspect, an embodiment of the present disclosure provides a battery pack including one or more battery modules as described above.

Advantageous effects of embodiments of the present disclosure are as follows.

In the embodiment of the present disclosure, each of the battery cells is heat-exchanged between the heat-conductive member and the liquid-cooling plate through the heat-conductive member, and the value of α is set to be within the above-mentioned range to ensure that the heat-exchange area between the battery cell and the liquid-cooling plate is increased on the basis of the area for coolant flow in the liquid-cooling plate, so that the temperature of the battery cell may be controlled in an ideal state under a high-rate charging operation, thereby increasing the service life of the battery cell.

### BRIEF DESCRIPTION OF THE DRAWINGS

In order that the technical solutions in the embodiments of the present disclosure may be more clearly described, reference will now be made briefly to the accompanying drawings required for the description of the embodiments. It will be apparent that the accompanying drawings in the following description are merely some of the embodiments of the present disclosure, and other drawings may be made to those skilled in the art without involving any inventive effort.
FIG. 1 is a perspective view of a battery module according to an embodiment of the present disclosure;
FIG. 2 is a perspective view of a battery module which is not provided with a case according to an embodiment of the present disclosure;
FIG. 3 is a schematic diagram of a structure of a battery module which is not provided with a case according to an embodiment of the present disclosure;
FIG. 4 is an enlarged schematic diagram of an embodiment of the circled portion A in FIG. 3;
FIG. 5 is an enlarged schematic diagram of another embodiment of the circled portion A in FIG. 3;
FIG. 6 is an enlarged schematic diagram of the circled portion B in FIG. 3;
FIG. 7 is a schematic partial cross-sectional view of a liquid-cooling plate according to an embodiment of the present disclosure;
FIG. 8 is a schematic partial cross-sectional view of a liquid-cooling plate according to an embodiment of the present disclosure;
FIG. 9 is a partially exploded schematic view of a battery module according to an embodiment of the present disclosure;
FIG. 10 is an exploded schematic view of a liquid-cooling plate according to an embodiment of the present disclosure.

### Reference numerals:

1000. battery module; 1. liquid-cooling assembly; 11. liquid-cooling plate; 11A. arc-shaped portion; 11B. connecting portion; 2. battery cell assembly; 21. battery cell; 3. heat-conductive member; 31. first insulating layer; 32. first adhesive layer; 33. second adhesive layer; 4. second insulating layer; 111. liquid inlet channel; 111A. liquid inlet sub-channel; 112. liquid outlet channel; 112A. liquid outlet sub-channel; 113. first chamber; 114. liquid inlet end; 115. liquid outlet end; 101. liquid-cooling plate body; 102. stopper; 12. connecting member; 121. second chamber; 122. third chamber; 13. liquid inlet pipe; 14. liquid outlet pipe; 131. liquid inlet pipe section; 141. liquid outlet pipe section; 15. liquid inlet connector; 16. liquid outlet connector; 17. liquid inlet; 18. liquid outlet; 19. case.

### DETAILED DESCRIPTION

The technical solutions in the embodiments of the present disclosure will be clearly and completely described with reference to the accompanying drawings of the embodiments of the present disclosure, and it will be apparent that the described embodiments are merely part of, and not all, the embodiments of the present disclosure. Based on the embodiments of the present disclosure, all other embodiments obtained by a person skilled in the art without involving any inventive effort are within the scope of protection of the present disclosure. Furthermore, it is to be understood that the specific embodiments described herein are merely illustrative and explanatory of the present disclosure and are not intended to limit the same. In the present disclosure, unless otherwise specified, the directional words used such as "upper" and "lower" usually refer to the top and bottom of a device in actual use or working conditions, specifically to the directions shown in the drawings; while directional words used such as "inside" and "outside" refer to the outline of the device.

In the description of the present disclosure, unless otherwise explicitly specified and limited, the terms "connected", "joined", "fixed" and the like should be broadly interpreted. For example, it may refer to a fixed connection or a detachable connection; or it may be integrally formed, a mechanical connection or an electrical connection; or it may be a direct connection or an indirect connection through an intermediate medium; or it may be a communication within two components or an interaction between the two components. The skilled person in the art may understand the specific meanings of the above terms in the present disclosure based on the specific circumstances.

In the present disclosure, unless otherwise explicitly specified and limited, a first feature being "above" or "below" a second feature may include a direct contact between the first and second features, or it may include a contact between the first and second features through another feature between them instead of the first feature being in direct contact with the second feature. In addition, the first feature being "above", "on top of', or "over" the second feature may include the first feature being directly above or diagonally above the second feature, with the first feature being horizontally higher than the second feature. The first feature being "below", "under", or "beneath" the second feature may include the first feature being directly below or diagonally below the second feature, with the first feature being horizontally lower than the second feature.

In the description of the present embodiments, the terms "up", "down", "left", "right", "front", "rear", and other terms describing directional or positional relationships are based on the orientations or positional relationships shown in the drawings. They are used for the convenience of description and simplification of operation, and do not indicate or imply that the device or component must have a specific orientation, be constructed or operated in a specific orientation. Therefore, they should not be understood as limitations on the present disclosure. Furthermore, the terms "first" and "second" are used for distinguishing purposes in the description and do not carry any particular significance.

With the rapid development of new-energy vehicles, the requirements of pure electric vehicle users for vehicle mileage and charging rate are getting higher and higher, and the energy of a battery cell is getting higher and higher. As a result, the heating quantity of the battery cell in operation is getting higher and higher. At the same time, with the increase of the number of battery cells and the charging rate, the temperature consistency is more difficult to control, and the battery cell needs to be cooled and temperature-equalized through a more efficient liquid cooling solution.

In the related art, a liquid-cooling plate is mostly used for liquid-cooled heat dissipation of a battery cell, the liquid-cooling plate is in contact with a side surface of the battery cell, and the coolant flows in the liquid-cooling plate to form a convective heat transfer with the battery cell. However, due to the limited area for coolant flow in the liquid-cooling plate, it is difficult to control the temperature of the battery cell in an ideal state under a high-rate charging operation, thereby affecting a service life of the battery cell.

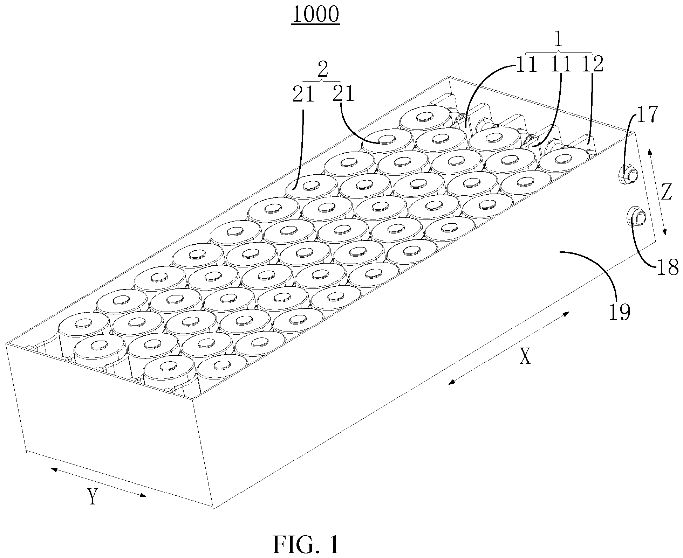

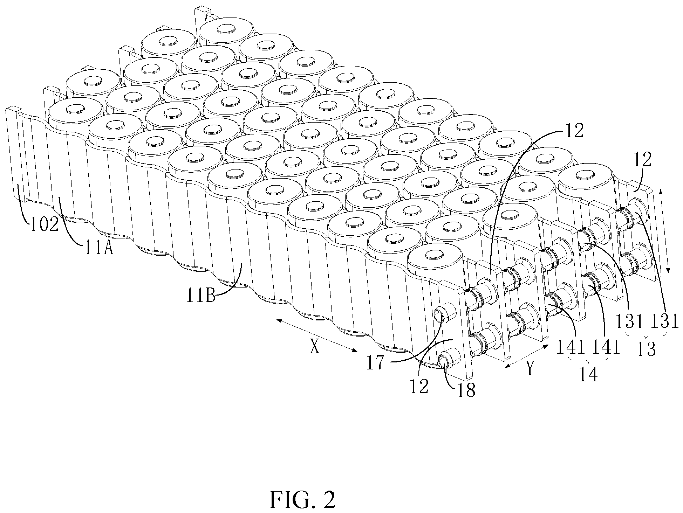

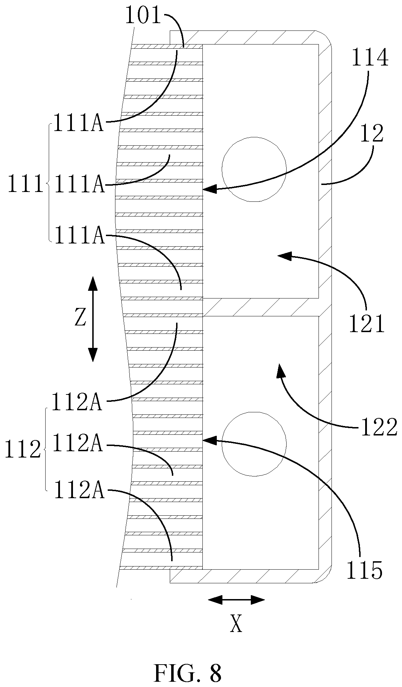

In view of this, the present disclosure proposes a battery module, and FIGS. 1-10 show some embodiments of the present disclosure. Here, as indicated by the direction labels in FIGS. 1-10, the X direction denotes a first direction, the Y direction denotes a second direction, and the Z direction denotes a third direction. The first direction, the second direction, and the third direction intersect each other, and an angle between any two of the first direction, the second direction, and the third direction is not limited herein, which may be 80°, 85°, 90°, 95°, and 100°. Preferably, in the following embodiments, descriptions are made by taking the angle between any two of the first direction, the second direction and the third direction as being 90°, that is, a spatial rectangular coordinate system is established by the first direction, the second direction and the third direction to explain some embodiments of the present disclosure. It should be emphasized that the angle of 90° between any two of the first direction, the second direction and the third direction does not constitute a limitation on the following embodiments of the present disclosure.

Referring to FIGS. 1-2, a battery module 1000 includes a liquid-cooling assembly 1 including a plurality of liquid-cooling plates 11 extending in the first direction X, the plurality of liquid-cooling plates 11 being arranged at intervals in the second direction Y, each of the liquid-cooling plates 11 including a plurality of arc-shaped portions 11A. Herein, the curvature of the arc-shaped portions 11A on one of the liquid-cooling plates 11 is not limited. Because the liquid-cooling plate 11 includes two sides oppositely disposed in the second direction Y, the arc-shaped portions 11A may be formed by bending portions of the liquid-cooling plate 11 towards either side thereof in the second direction Y

In some embodiments, the battery module 1000 further includes a plurality of cylindrically-shaped cells 21, each of which is disposed on a side of a respective liquid-cooling plate of the plurality of liquid-cooling plates 11 in the second direction Y and connected to a corresponding arc-shaped portion of the plurality of arc-shaped portions 11A of the respective liquid-cooling plate. That is, by installing the battery cell 21 at the arc-shaped portion 11A, heat exchange between the battery cell 21 and the liquid-cooling plate 11 may be realized, so that the liquid-cooling plate 11 may dissipate heat from the battery cell 21. The specific configuration of the battery cell 21 is not limited herein, which may be a polygon prism structure such as a quadrangular prism or a hexagonal prism, or may be a cylindrical structure.

It can be understood that because the battery cell 21 is of a columnar shape, heat exchange is performed between a side surface of the battery cell 21 and an arc-shaped portion 11A when the battery cell 21 is installed at the arc-shaped portion 11A, and the arc-shaped portion 11A adopting a curved shape may establish a larger heat exchange area with the side surface of the battery cell 21, thereby improving the heat exchange efficiency of the liquid-cooling plate 11 on the battery cell 21. On this basis, because a surface of the arc-shaped portion 11A adjacent to the battery cell 21 is an arc surface, in order to improve the heat exchange efficiency between the battery cell 21 and the liquid-cooling plate 11, in a preferred embodiment of the present disclosure, the battery cell 21 has a cylindrical structure.

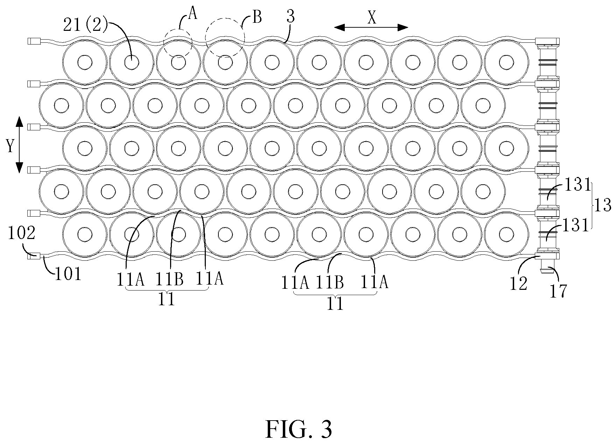

Referring to FIGS. 3-4, in some embodiments, the battery module 1000 further includes a plurality of heat-conductive member 3 each disposed between a battery cell of the plurality of battery cells 21 and a respective arc-shaped portion of the plurality of arc-shaped portions 11A of the liquid-cooling plate for which the battery cell is disposed on the side thereof. The plurality of heat-conductive member 3 is each connected to the battery cell 21 and the respective arc-shaped portion 11A. That is, in this embodiment, because the side surface of the battery cell 21 is arc-shaped, the battery cell 21 performs heat exchange between the heat-conductive member 3 and the arc-shaped portion 11A. To ensure a larger contact area between the heat-conductive member 3 and the battery cell 21, that is, to make the heat exchange area of the battery cell 21 larger, the heat-conductive member 3 is provided against the side surface of the battery cell 21.

Further, for each of the plurality of heat-conductive members, an angle between lines connecting a center of an adjacent (e.g., contacted and/or connected) battery cell 21 and either end of the heat-conductive member 3 is denoted by α. Herein, the angle α satisfies 72°≤α≤82°.

In the embodiments of the present disclosure, each of the battery cells 21 is heat-exchanged between the heat-conductive member 3 and the liquid-cooling plate 11 through the heat-conductive member 3, and the value of α is set to be within the above-mentioned range to ensure that the heat-exchange area between the battery cell 21 and the liquid-cooling plate 11 is increased on the basis of the area for coolant flow in the liquid-cooling plate 11, so that the temperature of the battery cell 21 may be controlled in an ideal state under a high-rate charging operation, thereby increasing the service life of the battery cell.

If the value of α is less than 72°, the contact area between the heat-conductive member 3 and the battery cell 21 is too small, thereby affecting the heat exchange efficiency between the battery cell 21 and the liquid-cooling plate 11. If the value of α is greater than 82°, the curvature of the arc-shaped portion 11A is inconsistent with that of the battery cell 21, so that the thickness of the heat-conductive member 3 between the battery cell 21 and the arc-shaped portion 11A varies in the second direction Y When the value of α is greater than 82°, the heat-conductive member 3 is partially too thick, the thermal resistance of the overly thick area of the heat-conductive member 3 is too large, and the heat exchange efficiency is poor. At the same time, the volume of the heat-conductive member 3 increases, causing the corresponding cost of using the heat-conductive member 3 to increase.

The value of α may be 72°, 73°, 74°, 75°, 76°, 76.5°, 77°, 77.5°, 78°, 79°, 80°, 81°, 82°.

Note that the liquid-cooling plate 11 and the battery cell 21 are connected by the heat-conductive member 3, and θ=E/(A*λ) is obtained by a thermal resistance calculation formula, where θ denotes the contact thermal resistance, L denotes the thermal conductivity thickness, A denotes the contact area, and λ denotes the thermal conductivity coefficient. The smaller the value of θ, the higher the heat exchange efficiency between the liquid-cooling plate 11 and the battery cell 21. Because the value of λ and the value of L are constrained by the material of the heat-conductive member 3 and the size of the battery pack, the amount of change is not large, so that it is necessary to increase the heat exchange contact area between the liquid-cooling plate 11 and the battery cell 21, i.e., the value of A. In the embodiments of the present disclosure, the value of A is related to the value of α. The larger the value of α is, the larger the value of A is. Therefore, the range of the value of α is controlled, so that the heat exchange area between the liquid-cooling plate 11 and the battery cell 21 may be increased

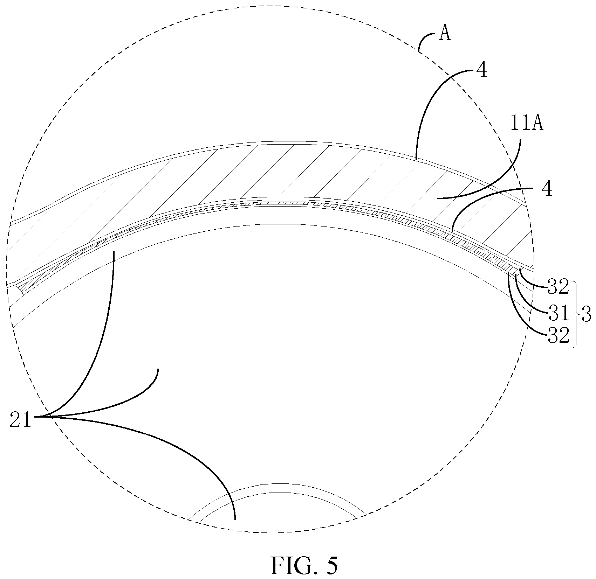

Referring to FIG. 5, in one embodiment of the present disclosure, each of the heat-conductive members 3 includes a first insulating layer 31 located between a batter cell of the plurality of battery cells 21 and a respective arc-shaped portion of the plurality of arc-shaped portions 11A of the liquid-cooling plate for which the battery cell is disposed on the side thereof, and two first adhesive layers 32. One of the two first adhesive layers 32 is located between the first insulating layer 31 and the respective arc-shaped portion 11A and is connected to the first insulating layer 31 and the respective arc-shaped portion 11A, and another one of the two first insulating layers 32 is located between the first insulating layer 31 and the battery cell 21 and is connected to the first insulating layer 31 and the battery cell 21. That is, in the present embodiment, the battery cell 21 and the arc-shaped portion 11A are bonded by the first adhesive layers 32 in the heat-conductive member 3, so that the installation and connection between the battery cell 21 and the liquid-cooling plate 11 is realized. Further, because the first insulating layer 31 is provided in the heat-conductive member 3, the first insulating layer 31 may serve to insulate between the liquid-cooling plate 11 and the battery cell 21, thereby avoiding the problem of a short-circuit in the battery module 1000.

From the above, the heat-conductive member 3 has both heat conducting and insulating functions, so that the functional diversity of the heat-conductive member 3 is improved. Further, the position of the heat-conductive member 3 is not limited, and the heat-conductive member 3 may be provided on the arc-shaped portion 11A, or may be provided on the integral outer surface of the liquid-cooling plate 11. When the heat-conductive member 3 is provided on the integral outer surface of the liquid-cooling plate 11, the first adhesive layer 32 located between the first insulating layer 31 and the liquid-cooling plate 11 affixes the liquid-cooling plate 11 and the first insulating layer 31, and the first adhesive layer 32 on the side of the first insulating layer 31 facing away from the liquid-cooling plate 11 may be provided at the arc-shaped portions 11A to adhere the battery cells 21.

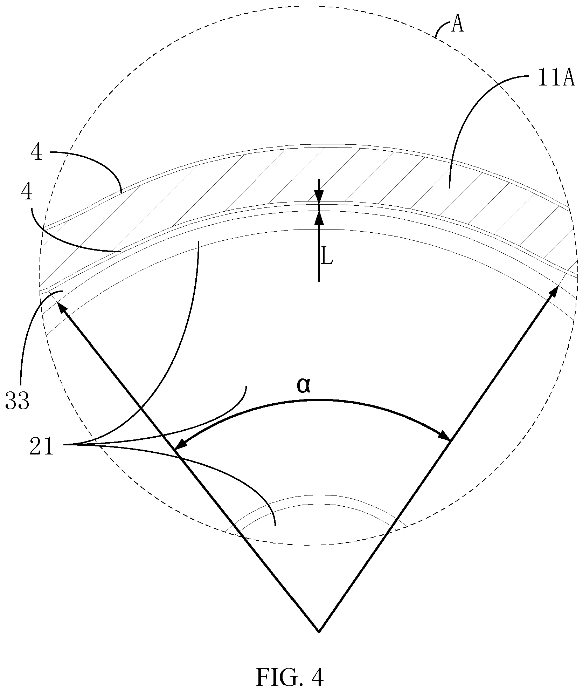

Referring to FIG. 4, in another embodiment of the present disclosure, each of the heat-conductive members 3 includes a second adhesive layer 33 located between a battery cell of the plurality of battery cells 21 and a respective arc-shaped portion of the plurality of arc-shaped portions 11A of the liquid-cooling plate for which the battery cell is disposed on the side thereof and connecting the battery cell 21 and the respective arc-shaped portion 11A. That is, in the present embodiment, the second adhesive layer 33 adheres the battery cell 21 and the arc-shaped portion 11A, thereby the installation and connection between the battery cell 21 and the liquid-cooling plate 11 is realized.

It should be noted that in the two embodiments, the specific materials of the first adhesive layer 32 and the second adhesive layer 33 are not limited herein, which may be a photosensitive adhesive, a pressure-sensitive adhesive, a thermally conductive structural adhesive, a thermally conductive gel, or the like. Because both the first adhesive layer 32 and the second adhesive layer 33 are colloid structures, the colloid may be compressively deformed, thereby facilitating affixing of the battery cell 21 onto the arc-shaped portion 11A and increasing the contact area between the heat-conductive member 3 and the battery cell 21. It will be appreciated that if the heat-conductive member 3 cannot be compressively deformed, the heat-conductive member 3 is not easily adhered to the side surface of the battery cell 21, which in turn reduces the contact area between the heat-conductive member 3 and the battery cell 21.

In some embodiments of the present disclosure, the liquid-cooling assembly 1 further comprises a second insulating layer 4 coated on outer surfaces of each of the liquid-cooling plates 11, the heat-conductive member 3 being in contact with a portion of the second insulating layer 4. That is, in the present embodiment, the second insulating layer 4 may serve to insulate between the liquid-cooling plate 11 and the battery cell 21, thereby avoiding the problem of a short-circuit in the battery pack. On the basis of the above-described embodiment in which the heat-conductive member 3 includes the second adhesive layer 33, the second insulating layer 4 may serve to insulate the battery cells 21 from the liquid-cooling plate 11.

On the basis of the above-described embodiment in which the heat-conductive member 3 includes the first insulating layer 31 and the first adhesive layers 32, the outer surface of the liquid-cooling plate 11 may also be coated with the second insulating layer 4. The second insulating layer 4 may further serve to insulate the battery cells 21 from the liquid-cooling plate 11.

Further, since the curvature of the arc-shaped portion 11A is different from that of the battery cell 21, the shortest distance between the circumference of the battery cell 21 to the arc-shaped portion 11A varies in the second direction Y, that is, the gap between the battery cell 21 and the arc-shaped portion 11A is gradually decreased and then gradually increased in the first direction X. It will be appreciated that the heat-conductive member 3 needs to be provided between the battery cell 21 and the arc-shaped portion 11A so that the battery cell 21 and the arc-shaped portion 11A are heat-exchanged. The larger the contact area is between the heat-conductive member 3 and the battery cell 21 and between the heat-conductive member 3 and the arc-shaped portion 11A, the better the heat-exchange effect is between the battery cell 21 and the arc-shaped portion 11A. Therefore, referring to FIG. 4, in an embodiment of the present disclosure, in the first direction X, the thickness of one of the heat-conductive members 3 in the second direction Y is gradually reduced and then gradually increased. That is, with such arrangement, the shape of the heat-conductive member 3 is allowed to coincide with the gap between the battery cell 21 and the arc-shaped portion 11A, thereby improving the heat exchange effect between the battery cell 21 and the arc-shaped portion 11A.

Similarly, the battery cell 21 is fixedly installed at the arc-shaped portion 11A through the heat-conductive member 3. On the basis that opposite sides of the heat-conductive member 3 in the second direction Y fit the surfaces of the arc-shaped portion 11A and the battery cell 21 respectively, the fastness of the fixation between the battery cell 21 and the liquid-cooling plate 11 may be improved.

It will be appreciated that, in the above-described embodiments, compared with a configuration in which the thickness of the heat-conductive member 3 in the second direction Y is the same or a configuration in which the thickness of the heat-conductive member 3 changes partially so that the heat-conductive member 3 does not match with the gap between the battery cell 21 and the arc-shaped portion 11A, the configuration in which the heat-conductive member 3 decreases gradually first and then increases gradually allows the space between two adjacent ones of the liquid-cooling plates 11 to meet the assembly requirements of the battery cells 21, that is, the heat-conductive member 3 will not occupy the installation space of the battery core 21, thereby preventing the heat-conductive members 3, the battery cells 21 and the liquid-cooling plates 11 from causing structural interference during assembly.

Further, the shortest distance between the battery cell 21 and the arc-shaped portion 11A in the second direction Y is defined as L, where L satisfies 0.05mm≤L≤0.5mm. The value of L is set to be within this range to satisfy the heat exchange requirements of the liquid-cooling plates 11 and the battery cells 21. It can be appreciated that the smaller the value of L, the higher the heat transfer efficiency of the liquid-cooling plates 11 and the battery cells 21. The value of L is set to be equal to or greater than 0.05 mm due to the problem of assembly tolerance and the fact that the heat-conductive member 3 itself has a certain thickness in the second direction Y The greater the value of L, the greater the thermal resistance between the liquid-cooling plates 11 and the battery cells 21, and the greater the length of the battery module 1000 in the second direction Y, thereby increasing the occupied space of the battery module 1000 in the battery pack, resulting in a decrease in the energy density of the battery pack. Therefore, the value of L is set to be less than or equal to 0.5 mm.

Herein, the value of L may be 0.05 mm, 0.1 mm, 0.15mm, 0.2 mm, 0.25 mm, 0.3 mm, 0.35mm, 0.4 mm, 0.45mm, 0.5 mm.

Referring to FIG. 3, in some embodiments of the present disclosure, in any two adjacent ones of the liquid-cooling plates 11, two of the arc-shaped portions 11A disposed on the two liquid-cooling plates 11 are oppositely arranged in the second direction Y A battery cell 21 of the plurality of battery cells is connected with the two arc-shaped portions 11A which are oppositely arranged. That is, in the present embodiment, the battery cell 21 is installed between the two adjacent liquid-cooling plates 11, both of which are heat-exchangeable with the battery cell 21, thereby improving the heat dissipation efficiency of the battery cell 21.

In one embodiment of the present disclosure, each of the liquid-cooling plates 11 further includes a plurality of connecting portions 11B that each connects two adjacent ones of the arc-shaped portions 11A in the liquid-cooling plate, and each of the connecting portions 11B is flat-plate-shaped or arc-shaped. Herein, the connecting portion 11B is arranged so that two adjacent arc-shaped portions 11A have a certain space in the first direction X, thereby providing a certain space for the installation of the battery cell 21. When the connecting portion 11B is provided in a flat-plate-shape, the connecting portion 11B does not facilitate installation of the battery cell. When the connecting portion 11B is provided in an arc-shape, specifically referring to FIG. 3, the connecting portion 11B and the arc-shaped portion 11A are bent in opposite directions in the second direction Y, so that the battery cell 21 may be installed at the connecting portion 11B between two adjacent arc-shaped portions 11A. At this point, the liquid-cooling plate 11 is continuously bent, that is, provided in a serpentine shape, therefore, the number of the plurality of battery cells 21 installed between two of the liquid-cooling plates 11 may be maximized. A number of battery cells 21 located between the two liquid-cooling plates 11 are defined as one battery cell group. With such arrangement, respective number of battery cells 21 in two adjacent ones of the battery cell groups in the second direction Y are staggered in the second direction Y

It should be noted that when the connecting portion 11B and the arc-shaped portion 11A are similarly provided in an arc-shape for installation of the battery cells 21, the connecting portion 11B has the same structural characteristics as the arc-shaped portion 11A described above.

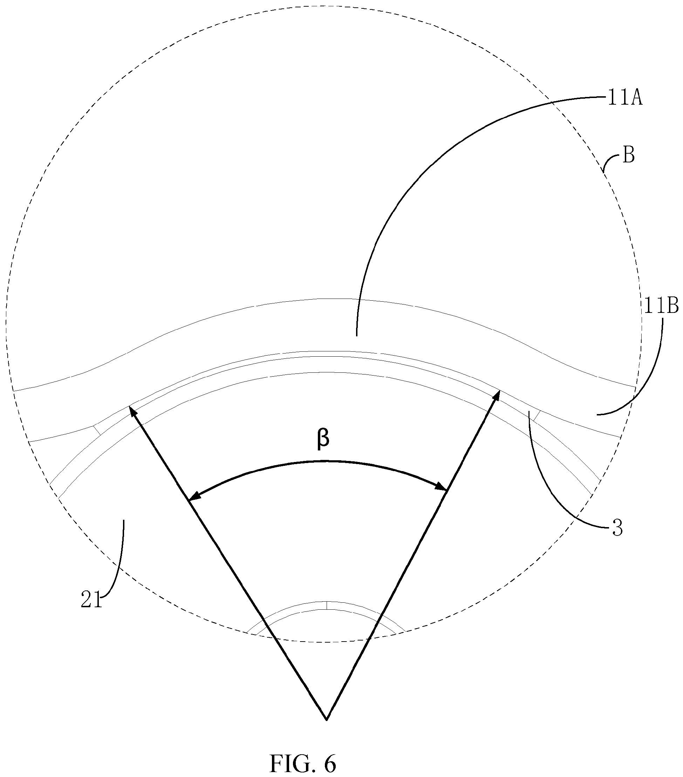

Further, because the bending angle of the arc-shaped portion 11A of the liquid-cooling plate 11 is related to the spacing between adjacent battery cells 21, it is necessary to ensure an electrical safety gap between the liquid-cooling plates 11 and the battery cells 21 and to rationalize the use of the space in the battery pack. Also, the larger the bending angle of the arc-shaped portion 11A, the lower the energy density within the battery pack. Therefore, referring to FIG. 6, in some embodiments of the present disclosure, for each of the arc-shaped portions, an angle between lines connecting a center of a circle where the arc-shaped portion 11A is located and either end of the arc-shaped portion 11A is defined as β, where β satisfies 56°≤β≤60°.

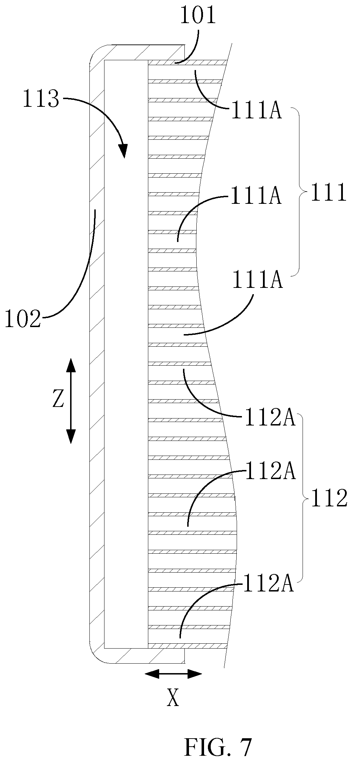

Referring to FIGS. 7-9, in some embodiments of the present disclosure, each of the liquid-cooling plates 11 is formed with a liquid inlet channel 111 and a liquid outlet channel 112 spaced apart in a third direction Z, and a first chamber 113 communicating with the liquid inlet channel 111 and the liquid outlet channel 112. Each of the liquid inlet channel 111 and the liquid outlet channel 112 extends in the first direction X, and at least a portion of an orthographic projection of the liquid inlet channel 111 and the liquid outlet channel 112 in the second direction Y falls on the battery cells 21 that are disposed on the side of the liquid-cooling plate. That is, in the present embodiment, when the coolant flows in the liquid inlet channel 111 and the liquid outlet channel 112, it passes through the same battery cell(s) 21. For explanation, the battery cells 21 between two liquid-cooling plates 11 are regarded as a battery cell group. The arrangement of the liquid inlet channel 111 and the liquid outlet channel 112 enables the coolant to flow through each of the battery cells 21 in the battery cell group twice in succession, thereby improving the cooling effect of the number of battery cells 21 in the battery cell group.

In some embodiments of the present disclosure, each of the liquid-cooling plates 11 includes a liquid inlet end 114 communicating with the liquid inlet channel 111 and a liquid outlet end 115 communicating with the liquid outlet channel 112. That is, the coolant flows into the liquid inlet channel 111 through the liquid inlet end 114, and flows out from the liquid outlet channel 112 through the liquid outlet end 115. In the liquid-cooling plate 11, the path of the coolant flow is as follows: the liquid inlet end 114 - liquid inlet channel 111 - first chamber 113 - liquid outlet channel 112 - liquid outlet end 115.

It should be noted that the specific channel forms of the liquid inlet channel 111 and the liquid outlet channel 112 are not limited herein, and the liquid inlet channel 111 and the liquid outlet channel 112 may each be formed by one channel or a plurality of sub-channels. In the specific embodiments of the present disclosure, the liquid inlet channel 111 includes a plurality of liquid inlet sub-channels 111A arranged in parallel in the third direction Z, and the liquid outlet channel 112 includes a plurality of liquid outlet sub-channels 112A arranged in parallel in the third direction Z. The number of the liquid inlet sub-channels 111A and the number of the liquid outlet sub-channels 112A are not limited herein, and may be adjusted according to the actual height of the liquid-cooling plate 11 in the third direction Z.

In some embodiments of the present disclosure, the liquid-cooling plate 11 includes a liquid-cooling plate body 101 extending in the first direction X, and a stopper 102. The liquid inlet channel 111 and the liquid outlet channel 112 are disposed in the liquid-cooling plate body 101, the liquid inlet end 114 and the liquid outlet end 115 are both disposed at a same end of the liquid-cooling plate body 101 in the first direction X, the stopper 102 is disposed at another end of the liquid-cooling plate body 101 in the first direction X, and the first chamber 113 is provided in the stopper 102. That is, in the present embodiment, the stopper 102 may be detachably connected to the liquid-cooling plate 11, so that the size of the first chamber 113 may be adjusted, and the flow uniformity of the coolant in the liquid-cooling plate 11 may be adjusted ( that is, the flow resistance of the coolant is adjusted) by replacing the stopper 102 of the first chamber 113 with different sizes. It will be appreciated that if the cross-sectional area of the first chamber 113 in the plane defined by the first direction X and the third direction Z decreases, the flow resistance of the coolant increases.

The liquid inlet end 114 and the liquid outlet end 115 are located at the same end of the liquid-cooling plate main body 101, and the first chamber 113 is located at the other end of the liquid-cooling plate main body 101, so that the coolant may flow through each of the battery cells 21 two times in succession. The earlier the coolant flows through a battery core 21 for the first time, the later the coolant flows through it again. Conversely, the later the coolant flows through a battery core 21 for the first time, the earlier the coolant flows through the battery core 21 again. Because the temperature of the coolant gradually rises during the flow process, the cooling effect gradually decreases, the better the cooling effect on the battery cores 21 when the coolant flows through for the first time, the worse the cooling effect on the same battery cores 21 when the coolant flows through for the second time. The superposition of two cooling effects may balance the cooling effects on multiple battery cells 21 in the first direction X, thereby allowing the battery module 1000 to have better temperature uniformity.

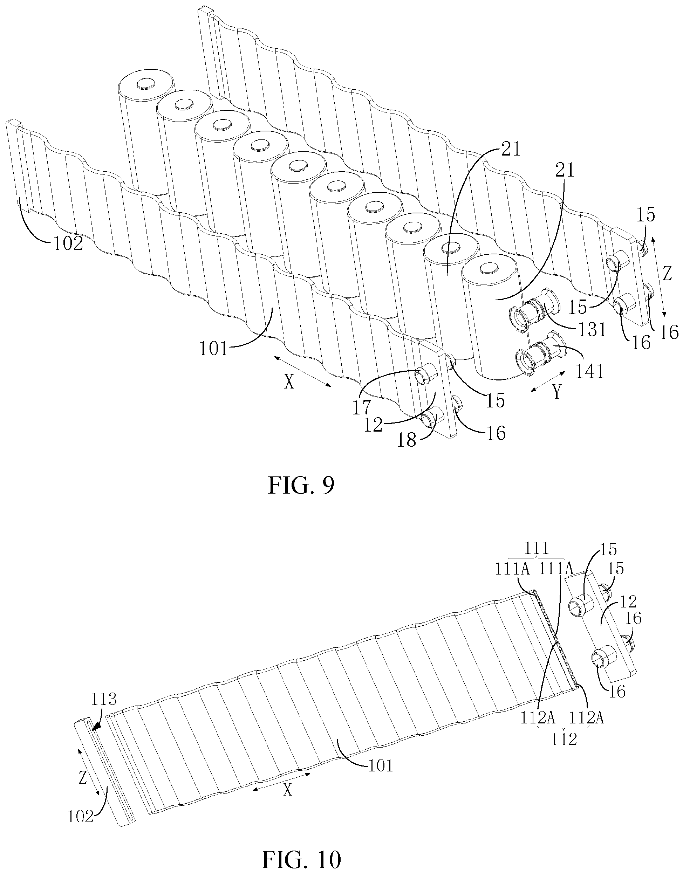

Referring to FIGS. 9-10, in some embodiments of the present disclosure, the liquid-cooling assembly 1 further includes a plurality of connecting members 12, a liquid inlet pipe and a liquid outlet pipe. Each of the connecting members 12 is disposed at one end of the liquid-cooling plate 11 provided with the liquid inlet end 114 and the liquid outlet end 115. Each of the connecting members 12 is formed with a second chamber 121 and a third chamber 122, the second chamber 121 is in communication with the liquid inlet end 114, and the third chamber 122 is in communication with the liquid outlet end 115. The liquid inlet pipe 13 communicates with the second chambers 121 of the connecting members 12, and the outlet pipe 14 communicates with the third chambers 122 of the connecting members 12. That is, in the present embodiment, the coolant flows into the second chambers 121 in the connecting members 12 from the liquid inlet pipe and flows into the liquid outlet pipe from the third chambers 122 in the connecting members 12. And the second chambers 121 in the connecting members 12 communicate with the liquid inlet ends 114 and the third chambers 122 in the connecting members 12 communicate with the liquid outlet ends 115, that is, the flow paths of the coolant in the liquid-cooling plates 11 are as described in the above embodiments. By means of the liquid inlet pipe, the liquid outlet pipe, and the plurality of connecting members 12, it is possible to enable the coolant to flow into the plurality of liquid-cooling plates 11 and to flow out of the plurality of liquid-cooling plates 11, realizing the circulation of the coolant in the liquid-cooling assembly 1, so as to carry out a heat exchange of the battery cell assembly 2.

Further, the liquid inlet pipe 13 includes a plurality of liquid inlet pipe sections 131 extending in the second direction Y, each of the liquid inlet pipe sections 131 being provided between two adjacent connecting members 12 and communicating the second chambers 121 of the two adjacent connecting members 12. The liquid outlet pipe 14 includes a plurality of liquid outlet pipe sections 141 extending in the second direction Y, each of the liquid outlet pipe sections 141 being provided between two adjacent connecting members 12 and communicating with the third chambers 122 of the two adjacent connecting members 12. That is, in the present embodiment, one of the liquid inlet pipe sections 131 may communicate with the second chambers 121 in two of the connecting members 12, and one of the liquid outlet pipe sections 141 may communicate with the third chambers 122 in two of the connecting members 12, so that the coolant may flow between the two adjacent connecting members 12.

Further, an orthographic projection of a pair of the liquid inlet pipe section 131 and the liquid outlet pipe section 141 in the second direction Y falls on the connecting members 12 (for example, the two adjacent connecting members 12), so that the liquid inlet pipe section 131 and the liquid outlet pipe section 141 do not protrude from between the two connecting members 12, reducing the overall volume of the battery module 1000, thereby reducing the occupied space of the battery module 1000 in the battery pack.

Referring again to FIGS. 9 and 10, in some embodiments of the present disclosure, the liquid-cooling assembly 1 further includes a plurality of liquid inlet connectors 15 and a plurality of liquid outlet connectors 16. Each of the connecting members 12 is provided with one of the liquid inlet connectors 15 and one of the liquid outlet connectors 16, the liquid inlet connector 15 communicates with the second chamber 121 of the connecting member 12, and the liquid outlet connector 16 communicates with the third chamber 122 of the connecting member 12. Herein, at least part of the liquid inlet pipe section 131 is sleeved on a circumference of the liquid inlet connector 15, and at least part of the liquid outlet pipe section 141 is sleeved on a circumference of the liquid outlet connector 16. That is, in the present embodiment, in order to securely fix the liquid inlet pipe section 131, the liquid outlet pipe section 141, and the connecting member 12, there are provided the liquid inlet pipe section 131 sleeved on the liquid inlet connector 15, and the liquid outlet pipe section 141 sleeved on the liquid outlet connector 16.

In some embodiments of the present disclosure, the liquid-cooling assembly 1 is further provided with a liquid inlet 17 and a liquid outlet 18 on one of the connecting members 12 on one side in the second direction Y The liquid inlet 17 communicates with the second chamber 121 of the connecting member 12, and the liquid outlet 18 communicates with the third chamber 122 of the connecting member 12. That is, in the present embodiment, the coolant may be supplied to the liquid-cooling assembly 1 from the liquid inlet 17, and may flow out from the liquid outlet 18 after completion of the circulation in the liquid-cooling assembly 1.

Referring again to FIG. 1, the battery module 1000 further includes a case 19 in which the liquid-cooling assembly 1 and the battery cell assembly 2 are disposed, and the liquid inlet 17 and the liquid outlet 18 extend out from the case 19.

The present disclosure also provides a battery pack including one or more battery modules 1000 as described above. The battery module 1000 employs all the technical solutions of the above-described embodiments. Therefore, the battery pack 1000 has at least the beneficial effects of the technical solutions of the above-described embodiments, and details are not described herein.

The present disclosure has been described in detail with specific examples used herein to illustrate the principles and embodiments of the present disclosure. The description of the above embodiments is merely intended to assist in understanding the methods of the present disclosure and its core idea. At the same time, for those skilled in the art, there will be changes in the specific implementations and application scope based on the ideas of the present disclosure. In summary, the content of this description should not be understood as a limitation of the present disclosure.

## Claims

1. A battery module (1000), **characterized in that** the battery module (1000) comprises:
a liquid-cooling assembly (1) including a plurality of liquid-cooling plates (11) extending in a first direction, the plurality of liquid-cooling plates (11) being arranged at intervals in a second direction intersecting the first direction, each of the liquid-cooling plates (11) including a plurality of arc-shaped portions (11A);
a battery cell assembly (2) including a plurality of cylindrically-shaped battery cells (21), each of the battery cells (21) being disposed on a side of a respective liquid-cooling plate (11) of the plurality of liquid-cooling plates (11) in the second direction and connected to a corresponding arc-shaped portion (11A) of the plurality of arc-shaped portions (11A) of the respective liquid-cooling plate (11); and
a plurality of heat-conductive members (3) each disposed between a battery cell (21) of the plurality of battery cells (21) and a respective arc-shaped portion (11A) of the plurality of arc-shaped portions (11A) of the liquid-cooling plate (11) for which the battery cell (21) is disposed on the side thereof, and connected to the battery cell (21) and the respective arc-shaped portion (11A);
wherein, for each of the plurality of heat-conductive members (3), an angle α between lines connecting a center of an adjacent battery cell (21) and either end of the heat-conductive member (3) satisfies: 72°≤α≤82°.

2. The battery module (1000) of claim 1, **characterized in that** in the first direction, a thickness of each of the heat-conductive members (3) in the second direction is gradually reduced and then gradually increased.

3. The battery module (1000) of claim 2, **characterized in that** a shortest distance L in the second direction between the battery cell (21) and the respective arc-shaped portion (11A) satisfies 0.05mm≤L≤0.5mm.

4. The battery module (1000) of claim 1, **characterized in that** for each of the arc-shaped portions (11A), an angle β between lines connecting a center of a circle where the arc-shaped portion (11A) is located and either end of the arc-shaped portion (11A) satisfies: 56°≤β≤60°.

5. The battery module (1000) of any of claims 1 to 4, **characterized in that** in any two adjacent ones of the liquid-cooling plates (11), two of the arc-shaped portions (11A) disposed on the two liquid-cooling plates (11) are oppositely arranged in the second direction;
a battery cell (21) of the plurality of battery cells (21) is connected with the two arc-shaped portions (11A) which are oppositely arranged in the second direction.

6. The battery module (1000) of any of claims 1 to 4, **characterized in that** each of the liquid-cooling plates (11) further includes a plurality of connecting portions (11B) that each connects two adjacent ones of the arc-shaped portions (11A) in the liquid-cooling plate (11), and each of the connecting portions is flat-plate-shaped or arc-shaped.

7. The battery module (1000) of any of claims 1 to 4, **characterized in that** each of the heat-conductive members (3) includes:
a first insulating layer (31) located between a batter cell (21) of the plurality of battery cells (21) and a respective arc-shaped portion (11A) of the plurality of arc-shaped portions (11A) of the liquid-cooling plate (11) for which the battery cell (21) is disposed on the side thereof; and
two first adhesive layers (32);
wherein one of the two first adhesive layers (32) is located between the first insulating layer (31) and the respective arc-shaped portion (11A) and is connected to the first insulating layer (31) and the respective arc-shaped portion (11A), and another one of the two first adhesive layers (32) is located between the first insulating layer (31) and the battery cell (21) and is connected to the first insulating layer (31) and the battery cell (21).

8. The battery module (1000) of any of claims 1 to 4, **characterized in that** each of the heat-conductive members (3) includes a second adhesive layer (33) located between a battery cell (21) of the plurality of battery cells (21) and a respective arc-shaped portion (11A) of the plurality of arc-shaped portions (11A) of the liquid-cooling plate (11) for which the battery cell (21) is disposed on the side thereof and connecting the battery cell (21) and the respective arc-shaped portion (11A);
the liquid-cooling assembly (1) further includes a second insulating layer (4) coated on outer surfaces of each of the liquid-cooling plates (11), the heat-conductive members (3) being in contact with a portion of the second insulating layer (4).

9. The battery module (1000) of any of claims 1 to 4, **characterized in that** each of the liquid-cooling plates (11) is formed with a liquid inlet channel (111) and a liquid outlet channel (112) spaced apart in a third direction, and a first chamber (113) communicating with the liquid inlet channel (111) and the liquid outlet channel (112), the liquid inlet channel (111) and the liquid outlet channel (112) both extending in the first direction, the first direction, the second direction, and the third direction intersecting each other;
each of the liquid-cooling plates (11) includes a liquid inlet end (114) communicating with the liquid inlet channel (111) and a liquid outlet end (115) communicating with the liquid outlet channel (112);
wherein at least a portion of an orthographic projection of the liquid inlet channel (111) and liquid outlet channel (112) in the second direction falls on the battery cells (21) that are disposed on the side of the liquid-cooling plate (11).

10. The battery module (1000) of claim 9, **characterized in that** the liquid inlet end (114) and the liquid outlet end (115) are disposed at a same end of the liquid-cooling plate (11);
the liquid-cooling assembly (1) further includes:
a plurality of connecting members (12) each disposed at one end of the liquid-cooling plate (11) provided with the liquid inlet end (114) and the liquid outlet end (115), wherein each of the connecting members (12) is formed with a second chamber (121) and a third chamber (122) spaced apart, the second chamber (121) communicating with the liquid inlet end (114), and the third chamber (122) communicating with the liquid outlet end (115);
a liquid inlet pipe (13) communicating with the second chambers (121) of the connecting members (12); and
a liquid outlet pipe (14) communicating with the third chambers (122) of the connecting members (12).

11. The battery module (1000) of claim 10, **characterized in that** the liquid inlet pipe (13) includes a plurality of liquid inlet pipe sections (131) extending in the second direction, each of the liquid inlet pipe sections (131) being provided between two adjacent ones of the connecting members (12) and communicating the second chambers (121) of the two adjacent connecting members (12), and wherein the liquid outlet pipe (14) includes a plurality of liquid outlet pipe sections (141) extending in the second direction, each of the liquid outlet pipe sections (141) being provided between two adjacent ones of the connecting members (12) and communicating with the third chambers (122) of the two adjacent connecting members (12).

12. The battery module (1000) of claim 11, **characterized in that** an orthographic projection of a pair of the liquid inlet pipe section (131) and the liquid outlet pipe section (141) in the second direction falls on the two adjacent connecting members (12).

13. The battery module (1000) of any of claims 10-12, **characterized in that** the liquid-cooling assembly (1) further includes a plurality of liquid inlet connectors (15) and a plurality of liquid outlet connectors (16), each of the connecting members (12) is provided with one of the liquid inlet connectors (15) and one of the liquid outlet connectors (16), the liquid inlet connector (15) communicates with the second chamber (121) of the connecting member (12), and the liquid outlet connector (16) communicates with the third chamber (122) of the connecting member (12).

14. The battery module (1000) of any of claims 10-13, **characterized in that** the liquid-cooling assembly (1) is further provided with a liquid inlet (17) and a liquid outlet (18) on one of the connecting members (12) on one side in the second direction, the liquid inlet (17) communicates with the second chamber (121) of the connecting member (12), and the liquid outlet (18) communicates with the third chamber (122) of the connecting member (12).

15. The battery module (1000) of any of claims 10-14, **characterized in that** the battery module (1000) further comprises a case (19) in which the liquid-cooling assembly (1) and the battery cell assembly (2) are disposed, and the liquid inlet (17) and the liquid outlet (18) extend out from the case (19).
